# EUROPEAN PATENT APPLICATION

(11) **EP 2 020 274 A1**
(43) Date of publication of application: **04.02.2009**
(21) Application number: 08252546.0
(22) Date of filing: 25.07.2008
(51) Int. Cl.: B23P 6/00, F01D 5/00

(54) **Apparatus and method for reparing airfoil tips**

(30) Priority: 26.07.2007 US 881272
(71) Applicant: United Technologies Corporation, Hartford, CT 06101 (US)
(72) Inventor: Milleville, Timoty A., Portland, CT 06480 (US)
(74) Representative: Tomlinson, Kerry John

(57) **Abstract**

A method of repairing an airfoil (22) for a gas turbine engine includes removing a damaged portion of the airfoil (27) at a radially outward tip (26) of the airfoil, securing temporarily a portion of a ceramic core stub (34) within an internal cavity of the airfoil, applying new metallic material (44) to the airfoil covering an exposed portion of the ceramic core stub (34), machining the airfoil (22) to remove an excess portion of the new metallic material (44), and removing the ceramic core stub (34) from the internal cavity (28) of the airfoil.

## Description

### BACKGROUND OF THE INVENTION

The present invention relates to repairs to tip regions of airfoils for use with gas turbine engines.

Airfoils for gas turbine engines are prone to wear and damage during use. Often, damage to blade airfoils occurs at the airfoil tip, that is, at the radially outward region of the airfoil. Damage can include cracks, burning, and other damage that makes repair desirable or necessary.

Many known airfoils include cooling features that help prevent thermal damage as a result of the high temperature present in gas turbine engines where the airfoils are installed. Such airfoils typically are "hollow" in the sense that they include a core formed by internal passageways that direct relatively cool fluid through the airfoil in a desired manner. These known core structures can include features such as trip strips, which are ridges in the blade that induce turbulence in cooling flows.

Repair processes are known for repairing the tip of a damaged airfoil. The technique of "open core welding", for instance, involves welding the airfoil tip while blowing air through the airfoil core in order to utilize the generated air pressure to prevent weld material from entering the core. However, known methods such as open core welding are insufficient to make repairs where damage to the airfoil extends significantly into the airfoil core structures, such as where a crack or other damage extends all the way from an exterior surface of an airfoil into core structures of that airfoil, affecting those core structures. Damage that reaches the core structures is generally considered outside repairable limits according to known repair processes. Moreover, open core welding does not permit complex internal core structures, like trip strips, to be preserved or rebuilt.

Thus, it is desired to provide a repair method that expands the repairable limits for airfoils damaged at a tip region.

### BRIEF SUMMARY OF THE INVENTION

A method of repairing an airfoil for a gas turbine engine according to the present invention includes removing a damaged portion of the airfoil at a radially outward tip of the airfoil, securing temporarily a portion of a ceramic core stub within an internal cavity of the airfoil, applying new metallic material to the airfoil covering an exposed portion of the ceramic core stub, machining the airfoil to remove an excess portion of the new metallic material, and removing the ceramic core stub from the internal cavity of the airfoil.

### BRIEF DESCRIPTION OF THE DRAWINGS

FIG. 1 is a flow chart that illustrates a repair method according to the present invention.
FIG. 2 is a side view of a damaged airfoil for a gas turbine engine.
FIG. 3 is a side view of the airfoil as a repair process is being performed.
FIGS. 4-7 are side views of a tip portion of the airfoil at various stages during the repair process.
FIG. 8 is a side view of a tip portion of the airfoil upon completion of the repair process.

### DETAILED DESCRIPTION

In general, the present invention relates to a method for repairing damage to components of gas turbine engines, and more particularly to repairing damage to tip regions of airfoils that are "hollow", that is, airfoils that have internal cooling passageways. The invention further relates to the structure of the repaired airfoil after a repair has been performed.

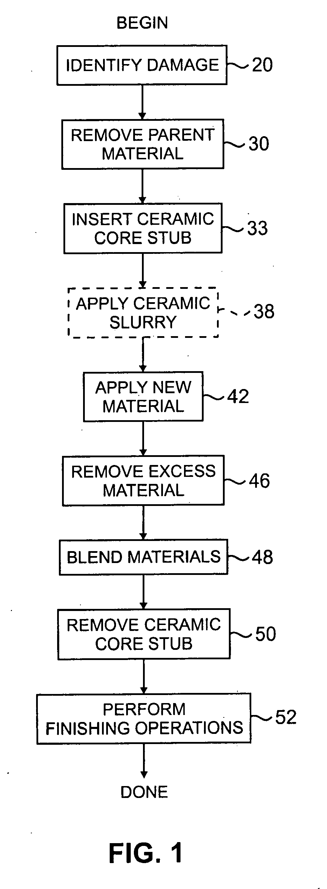

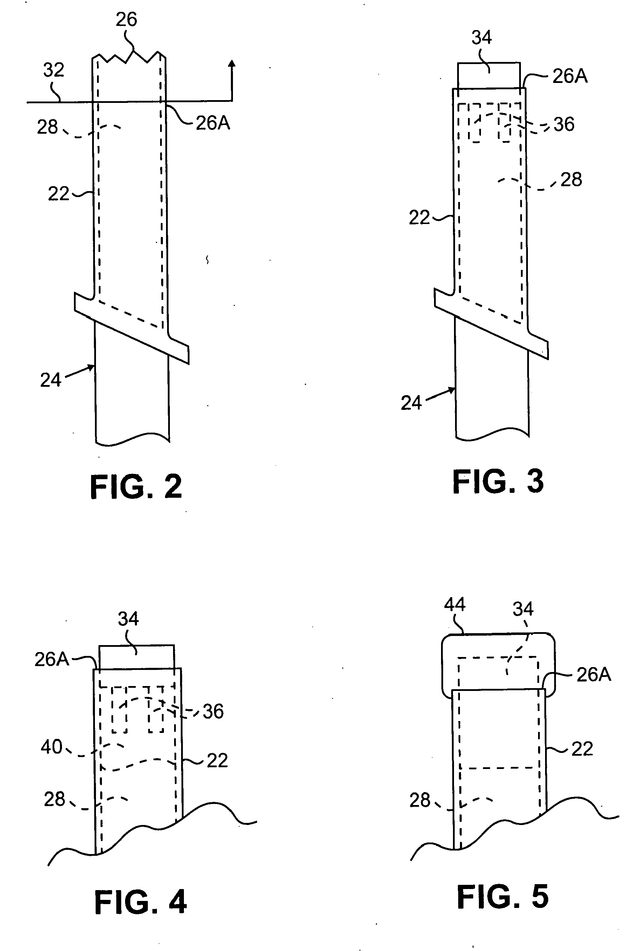

FIG. 1 is a flow chart that illustrates an embodiment of the inventive repair method. Details of the repair process will be described with reference to FIGS. 2-8. As shown in FIG. 1, an initial step is to identify damage to a tip region of a selected airfoil (step 20). The tip region is located at a radially outward portion of the airfoil when installed in an engine.

FIG. 2 is a side view of a damaged airfoil 22 of a turbine blade 24 that has previously been in use in a gas turbine engine. The airfoil 22 includes a tip region 26 and a core 28. The airfoil 22 is formed of a metallic parent material, for example, a nickel- or cobalt-based superalloy, or titanium and alloys thereof. The term "parent material" refers to material of the airfoil 22 that has previously been in service, and can include original material as well as other material added during previous repairs. The core 28 provides at least one internal cooling passageway through the airfoil 22. The core 28 is illustrated as a monolithic void defined within the airfoil 22. However, it should be recognized that the illustrated embodiment is provided merely by way of example, and those skilled in the art will recognize that the core 28 can include any number of internal passageways having any shape or arrangement to allow cooling fluid to flow through the airfoil 22. Moreover, the core 28 can include internal features such as trip strips or other structures.

As shown in FIG. 1, the next step is to remove parent material at the tip region 26 of the airfoil 22 (step 30). As shown in FIG. 2, the parent material is removed beyond a cut line 32. The amount of parent material removed, that is, the location of the cut line 32, can vary as dictated by the amount of damage identified. Moreover, in some situations, the cut line 32 can be located at a standardized location that is radially inward of the damage to the tip region 26. In any case, removal of parent material at step 30 exposes the core 28 at the tip region 26 (and newly establishes a tip region 26A).

Turning again to FIG. 1, the next step is to secure a ceramic core stub to the core 28 (step 33). The term "ceramic core stub" refers to a ceramic structure that resembles a portion of a structure that displaces molten material when originally casting the blade 24 to define the core 28. The ceramic core stub is a preformed structure that is inserted into the exposed core 28 of the airfoil 22 and secured there. The ceramic core stub has a shape that corresponds to a desired configuration of the core 28, and includes any internal features (e.g., trip strips) formed along the core 28.

FIG. 3 is a side view of the blade 24 with a ceramic core stub 34 partially inserted into the core 28 of the airfoil 22. A portion of the ceramic core stub 34 generally protrudes from the core 28, radially outward from the location of the cut line 32 (see FIG. 2). In order to suitably secure the ceramic core stub, the ceramic core stub 34 can be provided with one or more radially inwardly extending stumps 36 that are positioned to extend into the core 28.

Optionally, a ceramic slurry can be applied inside the core 28 of the airfoil 22 to adhere to the ceramic core stub 34 and better secure the ceramic core stub 34 to the core 28 (step 38). FIG. 4 is a side view of a portion of the airfoil 22 with a ceramic slurry 40 applied inside the core 28 to secure the ceramic core stub 34. The provision of the optional stumps 36 can enhance the effectiveness of the ceramic slurry 40 in securing the ceramic core stub 34 to the airfoil 22. Once the ceramic slurry 40 is applied, it can be hardened as desired. The hardened ceramic slurry 40 adhered to the ceramic core stub 34 can be considered to be a single structure for simplicity, and therefore the ceramic core stub 34, the stumps 36 and the ceramic slurry 40 are hereinafter collectively referred to as simply the ceramic core stub 34.

Next, as shown in FIG. 1, new material is applied to the airfoil 22 at the tip region 26A (step 42). FIG. 5 is a side view of a portion of the airfoil 22, showing new material 44 applied to the parent material of the airfoil 22 at the tip region 26A according to step 42. The new material 44 covers the ceramic core stub 34, effectively trapping it within the core 28 of the airfoil 22. The new material 44 forms a metallurgical bond with the parent material, and can be applied and built-up by a known welding technique, such as laser clad welding, tungsten inert gas (TIG) welding, or other suitable techniques. Typically, the new material 44 is applied to dimensions that are somewhat greater than the original airfoil 22 (i.e., greater than the blueprint specifications for the airfoil 22). The new material 44 can have a composition that is identical or similar to the composition of the parent material of the airfoil 22. Alternatively, the new material 44 can comprise an alloy that is more easily welded than the parent material of the airfoil 22. In some applications, it may be possible to use more easily weldable materials for the new material 44 when operational stresses are suitably low at the tip region 26A.

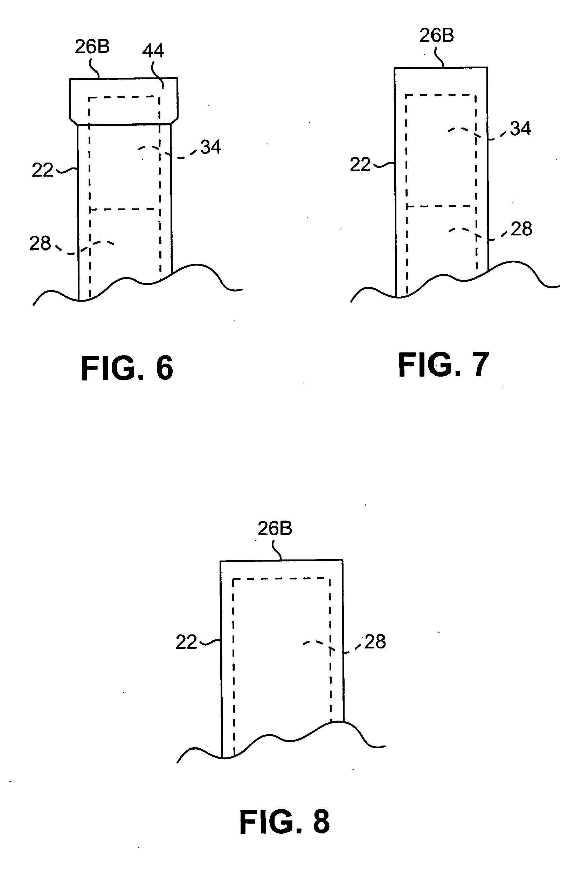

As shown in FIG. 1, the next step is to machine the airfoil 22 to remove excess portions of the new material 44, if any such excess new material 44 exists (step 46). FIG. 6 is a side view of a portion of the airfoil 22 after new material 44 is machined at a newly established tip region 26B to bring the airfoil 22 to a desired final spanwise dimension.

Next, as shown in FIG. 1, the new material 44 and the parent material of the airfoil 22 are blended (step 48). These machining and blending steps provide the airfoil 22 with a desired final contour, for instance, returning it to original (i.e., blueprint) dimensions, and reduce or eliminate any discontinuities at the joint where the new material 44 and the parent material of the airfoil 22 meet. FIG. 7 is a side view of a portion of the airfoil 22 after blending (step 48). At this stage during the repair process, the airfoil 22 has been restored to the desired final contour. However, the ceramic core stub 34 remains inside the core 28 of the airfoil 22.

Next, as shown in FIG. 1, the ceramic core stub 34 is removed from the core 28 of the airfoil 22 using a known autoclave process (step 50). During this step, the ceramic core stub 34 is broken up and drawn out of the airfoil 22 in a manner similar to that performed during original fabrication and prior to use. For example, the autoclave process can involve the use of Potassium Hydroxide, heat, pressure and agitation to break up and remove ceramic material of the ceramic core stub 34. Similar autoclave processes are used to remove the ceramic core from hollow investment castings (see, e.g., commonly-assigned U.S. Pat. No. 5,778,963, which is hereby incorporated in full by reference).

Lastly, as shown in FIG. 1, any desired finishing operations are performed (step 52). Examples of such finishing processes include heat treatments, the reapplication of coatings, and other known processes.

FIG. 8 is a side view of a portion of the airfoil 22 upon completion of the repair process of the present invention. The airfoil 22 is provided with a final contour, the ceramic core stub 34 has been removed such that the core 28 is open to permit cooling fluid to flow therethrough, and all finishing process have been performed.

Although the present invention has been described with reference to preferred embodiments, workers skilled in the art will recognize that changes may be made in form and detail without departing from the scope of the invention which is defined by the following claims and their equivalents. For instance, the repair of the present invention can be applied to applied to gas turbine engine components that have different configurations than the exemplary turbine blade discussed above and shown in the accompanying figures.

## Claims

1. A method of repairing an airfoil (22) for a gas turbine engine, wherein the airfoil defines an internal cavity (28), the method comprising:
removing a damaged portion of the airfoil (22) at a radially outward tip (26) of the airfoil;
securing temporarily a portion of a ceramic core stub (34) within the internal cavity (28) of the airfoil (22);
applying new metallic material (44) to the airfoil (22) covering an exposed portion of the ceramic core stub (34);
machining the airfoil (22) to remove an excess portion of the new metallic material (44); and
removing the ceramic core stub (34) from the internal cavity (28) of the airfoil (22).

2. The method of claim 1 and further comprising:
blending the new material (44) and the parent material of the airfoil to restore the airfoil (22) to a specified original shape.

3. The method of claim 1 or 2, wherein the airfoil (22) is shroudless at the tip.

4. The method of claim 1, 2 or 3, wherein the ceramic core stub (34) includes a first radially inwardly projecting stump (36).

5. The method of any preceding claim, further comprising:
applying a ceramic slurry (40) material to the portion of the ceramic core stub (34) inserted into the cavity (28) defined by the airfoil (22);
and
removing the ceramic slurry (40) material from the internal cavity (28) defined by the airfoil (22) along with the ceramic core stub (34).

6. The method of any preceding claim, wherein an autoclave is used in performing the step of removing the ceramic core stub (34) from the internal cavity (28) defined by the airfoil.

7. A method of repairing a shroudless airfoil (22) for a gas turbine engine, wherein the airfoil includes a metallic substrate that defines an internal cavity (28), the method comprising:
removing a damaged portion of the substrate at a radially outward tip (26) of the airfoil (22), wherein removal of the damaged portion exposes the internal cavity (28) defined by the substrate;
inserting a portion of a ceramic core stub (34) into the internal cavity (28) defined by the substrate;
applying a ceramic slurry material (40) to the portion of the ceramic core stub (34) inserted into the cavity (28) defined by the substrate;
applying new metallic material (44) to the substrate, wherein the new metallic material covers an exposed portion of the ceramic core stub (34) to reform the tip (26) of the airfoil (22), and wherein the ceramic core stub (34) and the ceramic slurry material (40) prevent new metallic material from entering a region that defines an outer extent of the internal cavity (28);
machining the tip (26) of the airfoil to remove an excess portion of the new metallic material (44); and
removing the ceramic core stub (34) and the ceramic slurry material (40) from the internal cavity (28).

8. The method of claim 7 and further comprising:
blending the new metallic material (40) and the metallic parent material to restore the airfoil (22) to a specified original shape.

9. The method of claim 7 or 8, wherein the ceramic core stub (34) includes a radially inwardly projecting stump (36) that facilitates joining the ceramic slurry (40) material to the ceramic core stub (34).

10. The method of claim 7, 8 or 9, wherein an autoclave is used in performing the step of removing the ceramic core stub (34) and the ceramic slurry material (40) from the internal cavity (28).

11. A repaired apparatus for a gas turbine engine, the apparatus comprising:
a metallic parent material that forms a first portion of an airfoil (22), wherein the first portion of the airfoil (22) has been in use in the gas turbine engine;
a new metallic material (44) metallurgically bonded to the metallic parent material at a radially outward tip portion (26) of the airfoil (22), wherein a first internal cavity (28) is defined by the metallic parent material and the new metallic material (44).

12. The apparatus of claim 11, wherein the airfoil (22) has a shroudless configuration.

13. The apparatus of claim 11 or 12, wherein the first internal cavity (28) comprises an internal cooling passageway.

14. The apparatus of claim 11, 12 or 13, wherein the metallic parent material and the new metallic material (44) comprise metallic materials of substantially the same composition.

15. The apparatus of any of claims 11 to 14, wherein the metallic parent material comprises a nickel-based superalloy.
